# EUROPEAN PATENT APPLICATION

(11) **EP 4 733 104 A1**
(43) Date of publication of application: **29.04.2026**
(21) Application number: 23943191.9
(22) Date of filing: 19.09.2023
(51) Int. Cl.: B60K 1/04, H01M 50/209, B60L 53/80

(54) **SUPPORT, SUPPORT ASSEMBLY AND VEHICLE**

(30) Priority: 30.06.2023 CN 202310798138
(71) Applicant: Contemporary Amperex Technology Co., Limited, Ningde, Fujian 352100 (CN)
(72) Inventor: CAO, Gen, Ningde, Fujian 352100 (CN)
(74) Representative: Kraus & Lederer PartGmbB
(86) International application number: PCT/CN2023/119836
(87) International publication number: WO 2025/000712

(57) **Abstract**

The present application discloses a support, a support assembly, and a vehicle. The support is configured to be installed on a frame, and the support includes a mounting beam. The mounting beam is provided with a plurality of mounting portions, the plurality of mounting portions are arranged spaced apart in a length direction of the mounting beam, and the plurality of mounting portions are configured to be detachably connected to batteries. A cavity is formed inside the mounting beam, and the cavity extends in the length direction of the mounting beam. The technical solution provided in the present application can improve the degree of weight reduction of the vehicle.

## Description

### CROSS-REFERENCE TO RELATED APPLICATION

The present application claims priority to Chinese patent application No. 202310798138X filed on June 30, 2023 and entitled "SUPPORT, SUPPORT ASSEMBLY, AND VEHICLE," the entire content of which is incorporated herein by reference.

### TECHNICAL FIELD

The present application relates to the technical field of new energy vehicles, and in particular to, a support, a support assembly, and a vehicle.

### BACKGROUND

New energy vehicles have become an important part of the sustainable development in the vehicle industry due to their energy-saving and environmental protection advantages. With the development of the new energy vehicles, the requirement of people for the cruising range of the new energy vehicles is also increasing. In order to meet the needs of the new energy vehicles to replenish the power loss in time during driving, solutions for replenishing the power loss in time by battery swapping have emerged.

For the new energy vehicles, how to improve the degree of weight reduction is a technical problem that needs to be solved urgently.

### SUMMARY

The present application provides a support, a support assembly, and a vehicle. The technical solutions provided by the present application can improve the degree of weight reduction of the vehicle.

The present application is implemented through the following technical solutions.

In a first aspect, the present application provides a support, configured to be installed on a frame, where the support includes a mounting beam. The mounting beam is provided with a plurality of mounting portions, the plurality of mounting portions are arranged spaced apart in a length direction of the mounting beam, and the plurality of mounting portions are configured to be detachably connected to batteries. A cavity is formed inside the mounting beam, and the cavity extends in the length direction of the mounting beam.

In the above solution, the support is configured to be installed on the frame of a vehicle, and the mounting portion on the mounting beam is configured to be detachably connected to the battery. By arranging the plurality of mounting portions spaced apart in the length direction of the mounting beam, it is possible to achieve modular battery swapping (that is, battery swapping on demand, for example, when the required cruising range is smaller, a smaller number of batteries can be installed on corresponding groups of mounting portions in the plurality of groups of mounting portions; when the required cruising range is larger, a larger number of batteries can be installed on corresponding groups of mounting portions in the plurality of groups of mounting portions) and/or increase locking points of the mounting beam and the battery to improve the locking strength. By forming the cavity inside the mounting beam, on the one hand, the support can be made lightweight, thereby improving the degree of weight reduction of the vehicle; on the other hand, since an extension direction of the cavity is consistent with an arrangement direction of the plurality of mounting portions, the influence of forming the cavity on the rigidity and strength of the support can be effectively reduced. Compared with the solution in which the cavity is formed inclined or perpendicular to the length direction of the mounting beam, the risk that due to impact, the support is bent or even broken along the location of the mounting portion can be reduced, so that the support has higher reliability under the condition of a high degree of weight reduction.

According to some embodiments of the present application, the mounting portion includes a mounting hole formed in the mounting beam; the mounting hole penetrates through the mounting beam in a first direction, and the first direction is perpendicular to the length direction of the mounting beam.

In the above solution, on the one hand, the mounting portion has a simple structure and thus is easy to manufacture; on the other hand, since the mounting portion has a simple structure, a connection method between the battery and the mounting portion is also simple, which can effectively improve the battery swapping efficiency; on the other hand, an extension direction of the cavity and a penetration direction of the mounting hole are perpendicular to each other, which can effectively reduce the influence of the cavity on the rigidity and strength of the support, so that the support has a higher structural strength to stably mount the battery, thereby improving the driving reliability of the vehicle.

According to some embodiments of the present application, the mounting portion further includes a mounting sleeve, and at least a part of the mounting sleeve is arranged in the mounting hole.

In the above solution, by arranging the mounting sleeve in the mounting hole, the structural strength of the mounting portion can be improved, so that the battery can be stably connected to the support, thereby reducing the risk of the battery falling off, and improving the driving reliability of the vehicle.

According to some embodiments of the present application, in the first direction, the mounting beam has a first end wall and a second end wall opposite to each other, and the mounting sleeve is connected to the first end wall and the second end wall.

In the above solution, by arranging the mounting sleeve to be connected to the first end wall and the second end wall, the mounting sleeve and the mounting beam are made as a whole, which can effectively alleviate the problem that due to forming of the cavity, the structural strength of the support is reduced, improve the rigidity and strength of the mounting portion, improve the deformation resistance of the support when mounting the battery, reduce the risk of the battery falling off, and thus improve the driving reliability of the vehicle.

According to some embodiments of the present application, an outer contour of a cross section of the mounting beam is rectangular.

In the above solution, by setting the outer contour of the cross section of the mounting beam to be rectangular, the mounting beam has good strength and rigidity after being provided with the cavity, thereby improving the deformation resistance of the support when mounting the battery.

According to some embodiments of the present application, a supporting member is arranged in the cavity, and the supporting member is connected to the mounting beam.

In the above solution, by arranging the supporting member in the cavity, the strength and rigidity of the mounting beam can be effectively improved, the deformation resistance of the support can be improved, and thus the driving reliability of the vehicle can be improved.

According to some embodiments of the present application, the supporting member and the mounting beam are integrally formed.

In the above solution, the supporting member and the mounting beam are integrally formed, which can make the support have higher strength and rigidity, improve the deformation resistance of the support when mounting the battery, reduce the risk of the battery falling off, and thus improve the driving reliability of the vehicle.

According to some embodiments of the present application, the supporting member and the mounting beam are formed by bending a plate.

In the above solution, the supporting member and the mounting beam are formed by bending a plate, so that the support has higher manufacturing efficiency and lower manufacturing costs.

According to some embodiments of the present application, the supporting member divides the cavity into a plurality of sub-cavities, and the sub-cavities extend in the length direction of the mounting beam.

In the above solution, the cavity is divided into the plurality of sub-cavities by the supporting member, and all the sub-cavities are independent of each other. Under the condition of improving the degree of weight reduction of the support, the strength and rigidity of the mounting beam can be effectively improved, the deformation resistance of the support can be improved, the risk of the battery falling off can be reduced, and thus the driving reliability of the vehicle can be improved.

According to some embodiments of the present application, the plurality of sub-cavities include a first sub-cavity and a second sub-cavity. The mounting beam includes a first wall, a second wall, a third wall, a fourth wall, a fifth wall, and a sixth wall. In a second direction, two ends of the first wall are connected to one end of the second wall and one end of the third wall, respectively; in the first direction, the fourth wall is arranged opposite to and spaced apart from the first wall, and one end of the fourth wall is connected to the other end of the second wall; in the first direction, the fifth wall is arranged opposite to and spaced apart from the first wall, and one end of the fifth wall is connected to the other end of the third wall; in the first direction, one end of the sixth wall is connected to the other end of the fourth wall, the other end of the sixth wall is connected to the first wall, and the first wall, the second wall, the fourth wall, and the sixth wall together define the first sub-cavity; the other end of the fifth wall is connected to the sixth wall, and the first wall, the third wall, the fifth wall, and the sixth wall together define the second sub-cavity, and the first direction, the second direction, and the length direction of the mounting beam are mutually perpendicular to each other.

In the above solution, the mounting beam has a simple structure, and thus is convenient to manufacture. The supporting member can include the sixth wall. By arranging the sixth wall, the sixth wall is enabled to be connected to the fourth wall and the first wall, arranged opposite to each other, of the mounting beam, the strength and rigidity of the mounting beam can be effectively improved, the risk of the battery falling off can be reduced, the deformation resistance of the support can be improved, and thus the driving reliability of the vehicle can be improved.

According to some embodiments of the present application, an end of the sixth wall away from the fourth wall is provided with a first bent portion, and the first bent portion extends in the second direction and is connected to the first wall.

In the above solution, by arranging the first bent portion, a connection area of the sixth wall and the first wall can be increased, the supporting capacity of the sixth wall can be improved, the strength and rigidity of the mounting beam can be effectively improved, the deformation resistance of the support can be improved, the risk of the battery falling off can be reduced, and thus the driving reliability of the vehicle can be improved.

According to some embodiments of the present application, the first bent portion extends from an end of the sixth wall toward the third wall.

In the above solution, by arranging the first bent portion to extend toward the third wall, the support is enabled to uniformly bear the impact, so that the deformation resistance of the support can be improved, the risk of the battery falling off can be reduced, and thus the driving reliability of the vehicle can be improved.

According to some embodiments of the present application, an end of the fifth wall away from the third wall is provided with a second bent portion, and the second bent portion extends in the first direction and is connected to the sixth wall.

In the above solution, by arranging the second bent portion, a connection area of the fifth wall and the sixth wall can be increased, and the reliability of connection between the fifth wall and the sixth wall can be improved, so that the mounting beam has a good carrying capacity due to the geometric shape of a cross section thereof, and the support has good deformation resistance while reducing the structural mass.

According to some embodiments of the present application, the support further includes a connecting portion, the connecting portion is connected to the mounting beam, and the connecting portion is configured to be connected to a longitudinal beam of the frame.

In the above solution, by arranging the connecting portion, the mounting beam can be effectively connected to the longitudinal beam of the frame, so that the mounting beam can effectively carry the battery through the mounting portion, the risk of the battery falling off can be reduced, and thus the driving reliability of the vehicle can be improved.

According to some embodiments of the present application, the mounting beam is provided with two connecting portions, the two connecting portions are arranged spaced apart, the two connecting portions and the mounting beam together form a groove with an upward opening, and the groove is used for the frame to pass through.

In the above solution, by arranging the two connecting portions, on the one hand, the groove for avoiding the longitudinal beam of the frame can be formed; on the other hand, the connecting portion can be connected to an outer side surface of the corresponding longitudinal beam, that is, two longitudinal beams of the frame are respectively connected by the corresponding connecting portion, so that a mounting unit and the frame have a stable connection relationship, thereby reducing the risk of the battery falling off and improving the driving reliability of the vehicle; on the other hand, since the two connecting portions are arranged and the two connecting portions are arranged spaced apart in a transverse direction of the frame, that is, the mounting beam can be provided with more mounting portions to mount larger batteries or more batteries, thereby effectively increasing the cruising range of the vehicle.

According to some embodiments of the present application, the support further includes a rib plate, the rid plate is located on a side of the connecting portion deviating from the groove, and the rib plate is connected to the mounting beam and the connecting portion.

In the above solution, by arranging the rib plate on an outer side of the frame, on the one hand, space between the connecting portion and the mounting beam can be reasonably utilized, and on the other hand, the structural strength of the connecting portion and the mounting beam can be improved, thereby reducing the risk of the battery falling off and improving the driving reliability of the vehicle.

According to some embodiments of the present application, an end of the rib plate close to the mounting beam is provided with a bent portion, and the rib plate is connected to the mounting beam through the bent portion.

In the above solution, by arranging the bent portion at the end of the rib plate close to the mounting beam, a connection area of the rib plate and the mounting beam can be increased, thereby improving the reliability of connection between the rib plate and the mounting beam.

According to some embodiments of the present application, a notch is formed in the end of the rib plate close to the mounting beam, and the notch is formed corresponding to the mounting portion.

In the above solution, the notch is formed in the end of the rib plate close to the mounting beam so as to free up space above the mounting portion, thereby reducing the risk of interference with the rib plate when the battery is mounted on the mounting portion.

According to some embodiments of the present application, the connecting portion is a flange arranged on the rib plate, and the rib plate and the connecting portion are arranged perpendicular to each other.

In the above solution, the connecting portion can be the flange arranged on the rib plate. For example, the connecting portion and the rib plate are integrally formed, which can make the connecting portion and the rib plate have higher structural strength, and can effectively improve the structural strength of the mounting beam, thereby effectively carrying the battery and reducing the risk of the battery falling off.

According to some embodiments of the present application, the rib plate includes a first rib plate and a second rib plate that are stacked, the connecting portion includes a first sub-connecting portion and a second sub-connecting portion, the first sub-connecting portion is a flange arranged on the first rib plate, and the second sub-connecting portion is a flange arranged on the second rib plate.

In the above solution, the rib plate can be in a double-layer plate structure. Since the rib plate is in the double-layer plate structure, two flanges in opposite directions can be formed by the rid plate, that is, the first sub-connecting portion and the second sub-connecting portion are formed, so that there is a larger connection area between the rib plate and the longitudinal beam, and the reliability of connection between the rib plate and the longitudinal beam can be improved, thereby improving the structural strength of the mounting beam, allowing the mounting beam to effectively carry the battery and reducing the risk of the battery falling off.

According to some embodiments of the present application, the support includes a plurality of mounting beams, the plurality of mounting beams are arranged spaced apart, and an accommodating space for accommodating at least a part of the battery is formed between every two adjacent mounting beams.

In the above solution, the support includes the plurality of mounting beams, so that the accommodating space for accommodating at least a part of the battery can be formed between every two adjacent mounting beams, and the battery can be installed in the corresponding accommodating space in an orderly manner, thereby improving the battery swapping efficiency of the vehicle.

In a second aspect, some embodiments of the present application further provide a support assembly, including a frame and the support provided in the first aspect. The support is mounted on a longitudinal beam of the frame.

In the above solution, by installing the support on the longitudinal beam of the frame, the frame can have a high degree of weight reduction while being able to achieve battery swapping operation.

According to some embodiments of the present application, the longitudinal beam includes a web, an upper wing plate, and a lower wing plate, and the web is connected to the upper wing plate and the lower wing plate. The support further includes a connecting portion, and the connecting portion is connected to the web.

In the above solution, the support is connected to the web of the longitudinal beam through the connecting portion, so that the support can be effectively installed on the longitudinal beam, thereby reducing the risk of the support falling off from the longitudinal beam and improving the driving reliability of the vehicle.

According to some embodiments of the present application, the mounting beam is connected to the lower wing plate.

In the above solution, the support is connected to the web of the longitudinal beam through the connecting portion, and connected to the lower wing plate of the longitudinal beam through the mounting beam, so that the support can be firmly installed on the longitudinal beam, thereby reducing the risk of the support falling off from the longitudinal beam and improving the driving reliability of the vehicle.

According to some embodiments of the present application, the support assembly further includes a reinforcing member, and the reinforcing member is connected to the longitudinal beam and the connecting portion.

In the above solution, by arranging the reinforcing member, on the one hand, the stability of connection between the support and the longitudinal beam can be improved, and on the other hand, the structural strength of the connecting portion can be effectively improved, thereby improving the structural stability of the support, reducing the risk of the battery detaching, and improving the driving stability of the vehicle.

According to some embodiments of the present application, the reinforcing member includes a first part and a second part connected to each other, the first part is located on a side of the connecting portion deviating from the web, the first part, the connecting portion, and the web are connected to each other, and the second part is connected to the upper wing plate.

In the above solution, the support is connected to the web of the longitudinal beam through the connecting portion, and connected to the upper wing plate of the longitudinal beam through the second part of the reinforcing member, so that the support can be firmly installed on the longitudinal beam, thereby reducing the risk of the support falling off from the longitudinal beam, and improving the driving reliability of the vehicle.

According to some embodiments of the present application, the first part is provided with a first through hole, the connecting portion is provided with a second through hole, the web is provided with a third through hole, the support assembly further includes a first fastener, and the first fastener penetrates through the first through hole, the second through hole, and the third through hole to fix the first part and the connecting portion to the web.

In the above solution, by forming the first through hole in the first part of the reinforcing member, forming the second through hole in the connecting portion, and forming the third through hole in the web of the longitudinal beam, the first fastener can lock the reinforcing member, the connecting portion, and the longitudinal beam into one, so that the support is firmly installed on the longitudinal beam, thereby reducing the risk of the support falling off from the longitudinal beam and improving the driving reliability of the vehicle.

According to some embodiments of the present application, the second part is provided with a fourth through hole, the upper wing plate is provided with a fifth through hole, the support assembly further includes a second fastener, and the second fastener penetrates through the fourth through hole and the fifth through hole to fix the second part to the upper wing plate.

In the above solution, by forming the fourth through hole in the second part of the reinforcing member and forming the fifth through hole in the upper wing plate of the longitudinal beam, the second fastener can lock the reinforcing member and the longitudinal beam into one, so that the support is firmly installed on the longitudinal beam, thereby reducing the risk of the support falling off from the longitudinal beam and improving the driving reliability of the vehicle.

In a third aspect, some embodiments of the present application further provide a vehicle, including:

a battery and the support assembly provided in the second aspect. The battery is detachably connected to the mounting portion.

In the above solution, a vehicle is provided, and the vehicle has a battery swapping function and the vehicle is highly lightweight.

The above descriptions are merely an overview of the technical solutions in the present application. In order to more clearly understand the technical means of the present application, the technical solutions can be implemented according to content of the description, and in order to make the above and other objectives, features, and advantages of the present application be understood more clearly, specific embodiments of the present application are described below.

### BRIEF DESCRIPTION OF DRAWINGS

In order to more clearly illustrate the technical solutions of the embodiments of the present application, the accompanying drawings that need to be used in the embodiments will be briefly introduced below, and it is to be understood that the following accompanying drawings only show some embodiments of the present application and therefore should not be regarded as limiting the scope. For those of ordinary skill in the art, other relevant accompanying drawings can also be obtained based on these accompanying drawings without creative work.
FIG. 1 is a schematic structural diagram of a vehicle in some embodiments of the present application;
FIG. 2 is a schematic diagram of a support and a frame in some embodiments of the present application.
FIG. 3 is a schematic diagram of a partial structure of the support in some embodiments of the present application;
FIG. 4 is an enlarged diagram of position A in FIG. 2;
FIG. 5 is a schematic diagram of a mounting hole and a mounting sleeve in some embodiments of the present application;
FIG. 6 is a schematic diagram of a cross section of a mounting beam in some other embodiments of the present application;
FIG. 7 is a schematic diagram of a cross section of a mounting beam in some other embodiments of the present application;
FIG. 8 is a structural diagram of a partial structure of the support in some embodiments of the present application;
FIG. 9 is a schematic structural diagram of a longitudinal beam in some embodiments of the present application; and
FIG. 10 is a schematic diagram of a partial structure of the support and the longitudinal beam in some embodiments of the present application.

Reference numerals: 100-support assembly; 10-support; 11-mounting beam; 110-mounting portion; 1100-mounting hole; 1101-mounting sleeve; 111-cavity; 1110-supporting member; 1111-first sub-cavity; 1112-second sub-cavity; 112-first end wall; 113-second end wall; 12-connecting portion; 120-groove; 121-second through hole; 13-rib plate; 130-bent portion; 131-notch; 132-first rib plate; 133-second rib plate; 21-first wall; 22-second wall; 23-third wall; 24-fourth wall; 25-fifth wall; 26-sixth wall; 27-first bent portion; 28-second bent portion; 31-seventh wall; 32-eighth wall; 33-ninth wall; 34-tenth wall; 35-eleventh wall; 36-twelfth wall; 37-thirteenth wall; 38-fourteenth wall; 39-third bent portion; 40-fourth bent portion; 50-frame; 51-longitudinal beam; 510-web; 5100-third through hole; 511-upper wing plate; 5110-fifth through hole; 512-lower wing plate; 60-reinforcing member; 61-first part; 610-first through hole; 62-second part; 620-fourth through hole; 63-first side wing portion; 64-second side wing portion; 71-first fastener; 72-second fastener; 73-third fastener; z-first direction; y-length direction of the mounting beam; x-second direction; 200-battery; 300-controller; 400-motor; 1000-vehicle.

### DETAILED DESCRIPTION

For the objectives, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the examples of the present application rather than all the embodiments. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to restrict the present application. The terms "include" and "having" and any variations thereof in the specification and the claims of the present application as well as the foregoing description of the drawings are intended to cover non-exclusive inclusions. The terms "first," "second," etc. in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

In some embodiments, the battery may be a battery module. When there are a plurality of battery cells, the plurality of battery cells are provided and fixed to form a battery module.

In some embodiments, the battery may be a battery pack. The battery pack includes a box body and a battery cell. The battery cell or the battery module is accommodated in the box body.

In some embodiments, the battery cell may be a secondary battery. The secondary battery refers to a battery cell that can be charged to activate the active material and thus continue to be used after the battery cell is discharged. The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present application.

At present, new energy vehicles often use battery swapping to replenish the power loss thereof in time during driving.

For the new energy vehicles, light weight affects the manufacturing costs and cruising range thereof. Therefore, how to reduce light is a technical problem that needs to be solved urgently.

The frame of the new energy vehicle with a battery swapping function is often equipped with a support for battery swapping, a mounting portion is arranged on a mounting beam of the support, and the mounting portion is configured to be detachably connected to a battery. The mounting portion includes a mounting hole formed in the mounting beam. The mounting hole is generally a through hole and penetrates through two opposite walls of the mounting beam. At present, in order to reduce the influence of forming the mounting hole on the strength and rigidity of the mounting beam, the mounting beam is often in a solid structure, so the mass thereof is large, which affects the degree of weight reduction of the vehicle.

In view of this, in order to increase the degree of weight reduction of the vehicle, some embodiments of the present application provide a support, configured to be installed on a frame, where the support includes a mounting beam. The mounting beam is provided with a plurality of mounting portions, the plurality of mounting portions are arranged spaced apart in a length direction y of the mounting beam, and the plurality of mounting portions are configured to be detachably connected to batteries. A cavity is formed inside the mounting beam, and the cavity extends in the length direction of the mounting beam.

In the above solution, the support is configured to be installed on the frame of a vehicle, and the mounting portion on the mounting beam is configured to be detachably connected to the battery. By arranging the plurality of mounting portions spaced apart in the length direction y of the mounting beam, it is possible to achieve modular battery swapping (that is, battery swapping on demand, for example, when the required cruising range is smaller, a smaller number of batteries can be installed on corresponding groups of mounting portions in the plurality of groups of mounting portions; when the required cruising range is larger, a larger number of batteries can be installed on corresponding groups of mounting portions in the plurality of groups of mounting portions) and/or increase locking points of the mounting beam and the battery to improve the locking strength. By forming the cavity inside the mounting beam, on the one hand, the support can be made lightweight, thereby improving the degree of weight reduction of the vehicle; on the other hand, since an extension direction of the cavity is consistent with an arrangement direction of the plurality of mounting portions, the influence of forming the cavity on the rigidity and strength of the support can be effectively reduced. Compared with the solution in which the cavity is formed inclined or perpendicular to the length direction of the mounting beam, the risk that due to impact, the support is bent or even broken along the location of the mounting portion can be reduced, so that the support has higher reliability under the condition of a high degree of weight reduction.

The support disclosed in the embodiment of the present application can be, but is not limited to be, installed on a frame of a passenger motor vehicle, a frame of a commercial cargo vehicle, and frames of other natures. The vehicle disclosed in the embodiment of the present application can be, but is not limited to, passenger motor vehicles, commercial cargo vehicles, and vehicles of other natures.

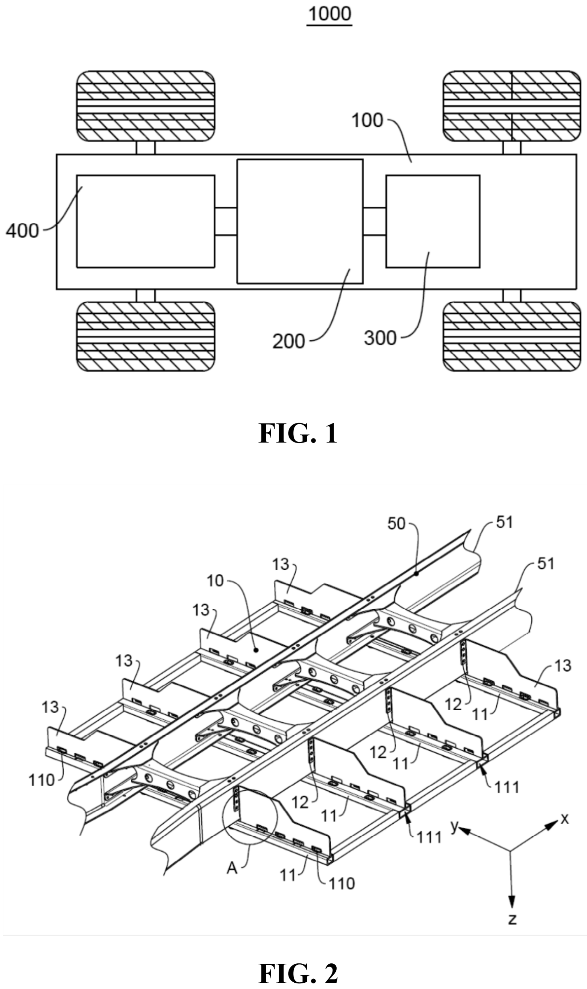

Referring to FIG. 1, FIG. 1 is a schematic structural diagram of a vehicle 1000 in some embodiments of the present application. The vehicle 1000 may be a new energy vehicle. The new energy vehicle may be an all-electric vehicle, a hybrid electric vehicle capable of swapping batteries, an extended-range vehicle capable of swapping batteries, or the like. The vehicle includes a battery 200. The battery 200 is arranged in the vehicle. The battery 200 may be arranged at a bottom or head or tail of the vehicle. The battery 200 may be used for supplying power to the vehicle. For example, the battery 200 may be used as an operating power source of the vehicle 1000, which is used for a circuit system of the vehicle 1000, for example, for operating power requirements of the vehicle 1000 during starting, navigation, and running.

The vehicle 1000 may further include a controller 300 and a motor 400. The controller 300 is configured to control the battery 200 to supply power to the motor 400, for example, to satisfy the operating power requirements of the vehicle 1000 during starting, navigation, and running.

In some embodiments of the present application, the battery 200 not only may serve as the operating power source of the vehicle, but also may serve as a driving power source of the vehicle, thus replacing or partially replacing fuel or natural gas to provide driving power for the vehicle.

In some embodiments, the vehicle 1000 may also include a support assembly 100. The support assembly 100 may include a frame 50 and a support 10. The frame 50 may be a frame structure straddling the front and rear axles of the vehicle, commonly known as a beam, and is the base of the vehicle. The functions of the frame 50 may include supporting and connecting various assemblies of the vehicle, keeping the various assemblies in relatively correct positions, and bearing various loads inside and outside the vehicle. In some embodiments, the frame 50 may include a pair of longitudinal beams 51, such as a first longitudinal beam and a second longitudinal beam. In a transverse direction of the frame 50, the first longitudinal beam is arranged opposite to and spaced apart from the second longitudinal beam. The first longitudinal beam and the second longitudinal beam may extend in a longitudinal direction of the frame 50. The support 10 is installed on the frame 50, the support 10 has a mounting portion 110, and the mounting portion 110 is configured to be detachably connected to the battery 200 to achieve battery swapping of the vehicle 1000.

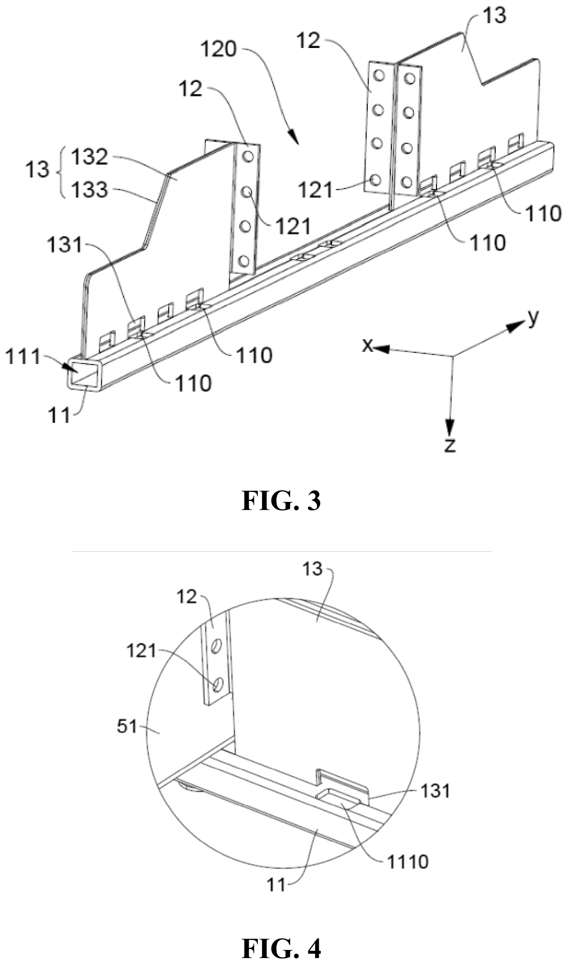

Some embodiments of the present application provide a support 10. Referring to FIG. 2 and FIG. 3, FIG. 2 is a schematic diagram of the support 10 and the frame 50 in some embodiments of the present application, and FIG. 3 is a schematic diagram of a partial structure of the support 10 in some embodiments of the present application.

The support 10 is configured to be installed on the frame 50, and the support 10 includes a mounting beam 11. The mounting beam 11 is provided with a plurality of mounting portions 110, the plurality of mounting portions 110 are arranged spaced apart in the length direction y of the mounting beam, and the plurality of mounting portions 110 are configured to be detachably connected to the battery 200. A cavity 111 is formed inside the mounting beam 11, and the cavity 111 extends in the length direction y of the mounting beam.

In some embodiments, the frame 50 may be a frame structure straddling the front and rear axles of the vehicle, commonly known as a beam, and is the base of the vehicle. The functions of the frame 50 may include supporting and connecting various assemblies of the vehicle, keeping the various assemblies in relatively correct positions, and bearing various loads inside and outside the vehicle. In some embodiments, the frame 50 is located at a bottom of the vehicle.

In some embodiments, the support 10 is a component fixed to the frame 50. In some embodiments, the support 10 may be connected to the frame 50 by bonding, welding, riveting, or connection through screws. In some other embodiments, the support 10 and the frame 50 may be integrally formed. In some embodiments, the support 10 may be connected to a longitudinal beam 51 of the frame 50.

In some embodiments, the support 10 has certain structural strength to be able to mount and carry the battery 200. In some embodiments, a material of the support 10 may be the same as or different from a material of the frame 50. In some embodiments, the material of the support 10 may be an aluminum alloy, steel, cast iron or reinforced plastic.

The mounting beam 11 is in a beam structure, which may be in a shape of a rod, a stick, a plate or a cylinder. The mounting beam 11 may be in a strip-shaped structure. The length direction y of the mounting beam may be a direction in which the mounting beam 11 has a larger size. Referring to FIG. 2, the length direction y of the mounting beam may be perpendicular to a longitudinal direction of the longitudinal beam 51 (length direction of the longitudinal beam 51). In some embodiments, as shown in FIG. 2, a part of the mounting beam 11 may be located between a pair of longitudinal beams 51 of the frame 50, and a part of the mounting beam 11 may be located on both sides of the frame 50 in the transverse direction of the frame 50. In some other embodiments, the mounting beam 11 may be located outside the frame 50. In some other embodiments, the mounting beam 11 may be located between a pair of longitudinal beams 51 of the frame 50.

In some embodiments, the support 10 may include a plurality of mounting beams 11, and the plurality of mounting beams 11 may be arranged spaced apart. For example, in a direction perpendicular to the length direction y of the mounting beam, the plurality of mounting beams 11 may be arranged spaced apart from each other. In some embodiments, the plurality of mounting beams 11 may be connected to each other via a connecting member, for example, every two adjacent mounting beams 11 may be connected via a connecting rod.

The mounting portion 110 is configured to be detachably connected to the battery 200. When the support 10 is applied to a vehicle, battery swapping of the vehicle can be achieved through the detachable connection of the mounting portion 110 and the battery 200.

A number of the mounting portions 110 is plural. On one mounting beam 11, the plurality of mounting portions 110 are arranged spaced apart in the longitudinal direction y of the mounting beam.

In some embodiments, the plurality of mounting portions 110 on the mounting beam 11 can be configured to be connected to the same battery 200. In some embodiments, the plurality of mounting portions 110 on the mounting beam 11 can be configured to be connected to different batteries 200, for example, some of the mounting portions 110 on the mounting beam 11 are configured to be connected to the same battery 200, and some other of the mounting portions 110 are configured to be connected to another battery 200. In some embodiments, one mounting beam 11 can mount one battery 200 or a plurality of batteries 200. In some embodiments, the plurality of mounting beams 11 can jointly mount one battery 200 or a plurality of batteries 200.

In some embodiments, the mounting portion 110 includes, but is not limited to, a mounting hole, a mounting screw, and other structures that can achieve detachable connection with the battery 200.

"A cavity 111 is formed inside the mounting beam 11" can be understood as that the cavity 111 is formed inside the mounting beam 11, so that the mounting beam 11 is made lightweight. In some embodiments, the cavity 111 may refer to a hollow portion inside the mounting beam 11, and the cavity 111 may penetrate through a wall of the mounting beam 11 or may not penetrate through the wall of the mounting beam 11. For example, in some embodiments, in the length direction y of the mounting beam, the cavity 111 penetrates through both ends of the mounting beam 11. For another example, in some embodiments, the cavity 111 is a chamber structure located inside the mounting beam 11, and the chamber structure is not connected to the outside.

"The cavity 111 extends in the length direction y of the mounting beam" can be understood as that a direction of a maximum size of the cavity 111 is the length direction y of the mounting beam, that is, it can also be understood as that the cavity 111 extends in an arrangement direction of the plurality of mounting portions 110.

In the above solution, the support 10 is configured to be installed on the frame 50 of the vehicle, and the mounting portion 110 on the mounting beam 11 is configured to be detachably connected to the battery 200. By arranging the plurality of mounting portions 110 spaced apart in the length direction y of the mounting beam, it is possible to achieve modular battery swapping (that is, battery swapping on demand, for example, when the required cruising range is smaller, a smaller number of batteries 200 can be installed on corresponding groups of mounting portions 110 in the plurality of groups of mounting portions 110; when the required cruising range is larger, a larger number of batteries 200 can be installed on corresponding groups of mounting portions 110 in the plurality of groups of mounting portions 110) and/or increase locking points of the mounting beam 11 and the battery 200 to improve the locking strength. By forming the cavity 111 inside the mounting beam 11, on the one hand, the support 10 can be made lightweight, thereby improving the degree of weight reduction of the vehicle; on the other hand, since the cavity 111 extends in the length direction y of the mounting beam, the influence on the rigidity and strength of the support 10 can be effectively reduced. Compared with the solution in which the cavity 111 is formed inclined or perpendicular to the length direction y of the mounting beam, the risk that due to impact, the support 10 is bent or even broken along the location of the mounting portion 110 can be reduced, so that the support 10 has higher reliability under the condition of a high degree of weight reduction.

According to some embodiments of the present application, referring to FIG. 4, FIG. 4 is an enlarged diagram of position A in FIG. 2. The mounting portion 110 includes a mounting hole 1100 formed in the mounting beam 11. The mounting hole 1100 penetrates through the mounting beam 11 in a first direction z, and the first direction z is perpendicular to the length direction y of the mounting beam.

The mounting hole 1100 may be a through hole structure penetrating through the mounting beam 11 in the first direction z. The first direction z is perpendicular to the length direction of the mounting beam 11. In some embodiments, when the support 10 is applied to a vehicle, the first direction z may be a direction of gravity. In some embodiments, the battery 200 has a mounting member, and the mounting member can pass through the mounting hole 1100 and be mounted on the mounting beam 11.

In some embodiments, the mounting hole 1100 penetrates through the mounting beam 11 in the first direction z, and the cavity 111 may penetrate through the mounting beam 11 in the length direction y of the mounting beam. In some embodiments, inside the mounting beam 11, the mounting hole 1100 and the cavity 111 may be interconnected. In some embodiments, when the support 10 is applied to a vehicle, since the mounting hole 1100 and the cavity 111 both penetrate through the mounting beam 11, and the mounting hole 1100 and the cavity 111 are interconnected inside the mounting beam 11, accumulated water that flows into the support 10 from the outside can be quickly discharged from the mounting beam 11.

In the above solution, on the one hand, the mounting portion 110 has a simple structure and thus is easy to manufacture; on the other hand, since the mounting portion 110 has a simple structure, a connection method between the battery 200 and the mounting portion 110 is also simple, which can effectively improve the battery swapping efficiency; on the other hand, an extension direction of the cavity 111 and a penetration direction of the mounting hole 1100 are perpendicular to each other, which can effectively reduce the influence of the cavity 111 on the rigidity and strength of the support 10, so that the support 10 has higher structural strength to stably mount the battery 200, thereby improving the driving reliability of the vehicle.

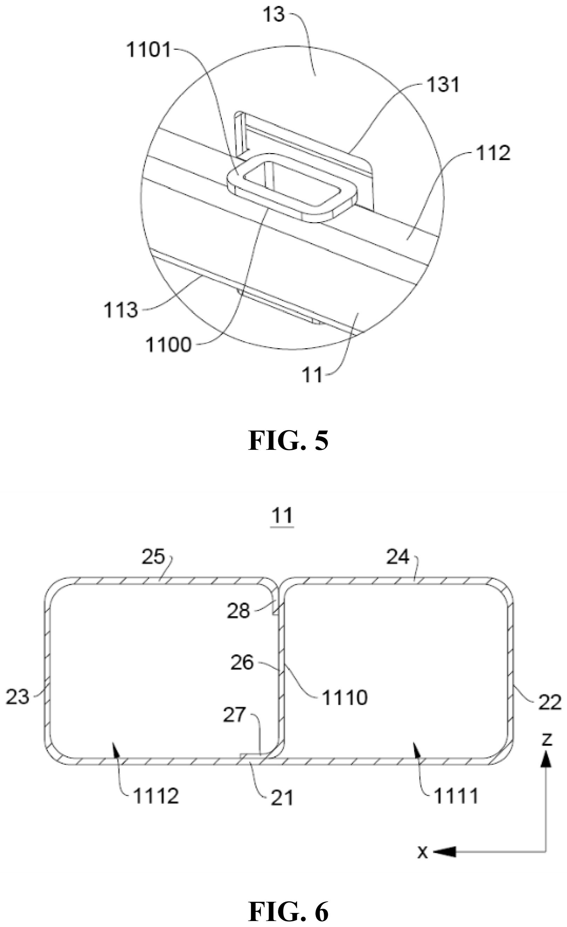

According to some embodiments of the present application, referring to FIG. 5, FIG. 5 is a schematic diagram of the mounting hole 1100 and a mounting sleeve 1101 in some embodiments of the present application.

The mounting portion 110 further includes the mounting sleeve 1101, and at least a part of the mounting sleeve 1101 is arranged in the mounting hole 1100.

In some embodiments, the mounting sleeve 1101 may be arranged in the mounting hole 1100, and the mounting sleeve 1101 may be arranged in the mounting hole 1100 by bonding, welding, connection through screws or other methods. In some embodiments, a material of the mounting sleeve 1101 may be the same as or different from a material of the mounting beam 11. In some embodiments, the material of the mounting sleeve 1101 may be an aluminum alloy, steel, or reinforced plastic.

In the above solution, by arranging the mounting sleeve 1101 in the mounting hole 1100, the structural strength of the mounting portion 110 can be improved, so that the battery 200 can be stably connected to the support 10, thereby reducing the risk of the battery 200 falling off, and improving the driving reliability of the vehicle.

According to some embodiments of the present application, referring to FIG. 5, in the first direction z, the mounting beam 11 has a first end wall 112 and a second end wall 113 opposite to each other, the mounting sleeve 1101 exceeds the first end wall 112 and the second end wall 113, and the mounting sleeve 1101 is connected to the first end wall 112 and the second end wall 113.

The first end wall 112 and the second end wall 113 are two walls of the mounting beam 11 that are opposite to each other in the first direction z. In some embodiments, the first direction z may be the direction of gravity, the first end wall 112 may be a top wall of the mounting beam 11, and the second end wall 113 may be a bottom wall of the mounting beam 11.

"The mounting sleeve 1101 is connected to the first end wall 112 and the second end wall 113" can be understood as that two ends of the mounting sleeve 1101 in the first direction z can be connected to the first end wall 112 and the second end wall 113. A connection relationship between the mounting sleeve 1101 and the first end wall 112, and between the mounting sleeve 1101 and the second end wall 113 includes, but is not limited to, welding, bonding, screwing, or riveting.

In some embodiments, in the first direction z, a size of the mounting beam 11 may exceed a size of the mounting beam 11, so that any end of the mounting beam 11 can extend beyond the first end wall 112 and the second end wall 113. For example, in the first direction z, both ends of the mounting beam 11 extend beyond the first end wall 112 and the second end wall 113, a portion of the mounting beam 11 extending beyond the first end wall 112 is connected to the first end wall 112, and a portion of the mounting beam 11 extending beyond the second end wall 113 is connected to the second end wall 113.

For example, referring to FIG. 5, a flange may be formed on the portion of the mounting beam 11 extending beyond the first end wall 112, and the flange may be connected to an outer surface of the first end wall 112. A connection relationship between the flange and the first end wall 112 includes, but is not limited to, overlapping, welding, bonding, riveting or connection through screws. The other end of the mounting beam 11 can be connected to the second end wall 113, and the mounting beam 11 can be connected to an inner surface or outer surface of the second end wall 113. A connection relationship between the mounting beam 11 and the second end wall 113 includes, but is not limited to, overlapping, welding, bonding, riveting or connection through screws. When the support 10 is applied to a vehicle, the second end wall 113 and the first end wall 112 are spaced apart from each other due to the forming of the cavity 111. When the battery 200 is mounted on the mounting beam 11, the gravity of the battery 200 can be transferred to the first end wall 112 and the second end wall 113 through the mounting sleeve 1101, thereby improving the deformation resistance of the mounting beam 11.

In some embodiments, a flange can be formed on the portion of the mounting beam 11 extending beyond the second end wall 113, and the flange can be connected to an outer surface of the second end wall 113. A connection relationship between the flange and the second end wall 113 includes, but is not limited to, overlapping, welding, bonding, riveting or connection through screws.

In the above solution, by arranging the mounting sleeve 1101 to be connected to the first end wall 112 and the second end wall 113, the mounting sleeve 1101 and the mounting beam 11 are made as a whole, which can effectively alleviate the problem that due to forming of the cavity 111, the structural strength of the support 10 is reduced, improve the rigidity and strength of the mounting portion 110, improve the deformation resistance of the support 10 when mounting the battery 200, reduce the risk of the battery 200 falling off, and thus improve the driving reliability of the vehicle.

According to some embodiments of the present application, referring to FIG. 2. An outer contour of a cross section of the mounting beam 11 is rectangular.

The cross section of the mounting beam 11 can be understood as a plane obtained by cutting the mounting beam 11 with a plane perpendicular to the length direction y of the mounting beam. The outer contour of the cross section of the mounting beam 11 is rectangular can be understood as that the outer contour of the cross section of the mounting beam 11 can be rectangular or quasi-rectangular.

In some embodiments, the cross section of the mounting beam 11 is hollow inside, and the hollowness is formed by the cavity 111.

In the above solution, by setting the outer contour of the cross section of the mounting beam 11 to be rectangular, the mounting beam 11 has good strength and rigidity after being provided with the cavity 111, thereby improving the deformation resistance of the support 10 when mounting the battery 200.

In some other embodiments, the cross section of the mounting beam 11 may be triangular, pentagonal or in other shapes.

According to some other embodiments of the present application, referring to FIG. 6, FIG. 6 is a schematic diagram of a cross section of a mounting beam 11 in some other embodiments of the present application.

A supporting member 1110 is arranged in the cavity 111, and the supporting member 1110 is connected to the mounting beam 11.

The supporting member 1110 is a component arranged in the cavity 111, and both ends of the supporting member 1110 can be connected to an inner wall of the mounting beam 11. In some embodiments, the supporting member 1110 can be a rod-shaped member or a rod-like member, and two opposite ends thereof can be connected to different inner walls of the mounting beam 11 (for example, two opposite ends of the supporting member 1110 can be connected to opposite inner walls of the mounting beam 11).

In some embodiments, a material of the mounting sleeve 1101 may be the same as or different from a material of the mounting beam 11. In some embodiments, the material of the mounting sleeve 1101 may be an aluminum alloy, steel, or reinforced plastic.

In some embodiments, the supporting member 1110 may be a component of the mounting beam 11, for example, integrally formed with the mounting beam 11. In some other embodiments, the supporting member 1110 is not a component of the mounting beam 11. After the mounting beam 11 is provided with the cavity 111, the supporting member 1110 is then placed in the cavity 111.

In some embodiments, a thickness direction of the supporting member 1110 may be perpendicular to the first direction z.

In the above solution, by arranging the supporting member 1110 in the cavity 111, the strength and rigidity of the mounting beam 11 can be effectively improved, the deformation resistance of the support 10 can be improved, and thus the driving reliability of the vehicle can be improved.

According to some embodiments of the present application, the supporting member 1110 and the mounting beam 11 are integrally formed.

In some embodiments, the supporting member 1110 and the mounting beam 11 can be integrally formed by a casting or roll forming process.

The roll forming process refers to a process that by means of the plastic movement characteristics of materials, the principle of rolling extrusion is used to form various complex parts. For example, referring to FIG. 6, the supporting member 1110 and the mounting beam 11 can be manufactured by roll forming of sheet metal parts.

In the above solution, the supporting member 1110 and the mounting beam 11 are integrally formed, which can make the support 10 have higher strength and rigidity, improve the deformation resistance of the support 10 when mounting the battery 200, reduce the risk of the battery 200 falling off, and thus improve the driving reliability of the vehicle.

According to some embodiments of the present application, the supporting member 1110 and the mounting beam 11 are formed by bending a plate.

In some embodiments, the supporting member 1110 and the mounting beam 11 can be formed by bending a plate by a roll forming process. In some other embodiments, the supporting member 1110 and the mounting beam 11 can be formed by bending a plate by a bending process.

The mounting beam 11 and the supporting member 1110 are manufactured by the roll forming process, which has the following advantages: the shape of the cross section can be reasonably designed to improve the carrying capacity of the mounting beam 11 and make the mounting beam 11 lightweight; high-strength materials can be used to further reduce the weight of the mounting beam 11 while meeting the carrying requirements; and the manufacturing costs are low.

In the above solution, the supporting member 1110 and the mounting beam 11 are formed by bending a plate, so that the support 10 has higher manufacturing efficiency and lower manufacturing costs.

According to some embodiments of the present application, the supporting member 1110 divides the cavity 111 into a plurality of sub-cavities 111, and the sub-cavities 111 extend in the length direction y of the mounting beam.

The cavity 111 extends in the length direction y of the mounting beam. In some embodiments, in a direction perpendicular to the length direction y of the mounting beam, the supporting member 1110 divides the cavity 111 into the plurality of sub-cavities 111, such that the sub-cavities 111 extend in the length direction y of the mounting beam.

The direction perpendicular to the length direction y of the mounting beam may be the first direction z. The direction perpendicular to the length direction y of the mounting beam may also be a second direction x, and the second direction x may be perpendicular to the first direction z. In some embodiments, when the supporting member 1110 divides the cavity 111 into the plurality of sub-cavities 111 in the first direction z, the mounting hole 1100 may penetrate through the supporting member 1110. In some embodiments, when the supporting member 1110 divides the cavity 111 into the plurality of sub-cavities 111 in the first direction z, the mounting hole 1100 may not penetrate through the supporting member 1110.

In some embodiments, when the mounting hole 1100 penetrates through the supporting member 1110, the mounting sleeve 1101 can be connected to the supporting member 1110, and a connection relationship between the mounting sleeve 1101 and the supporting member 1110 includes, but is not limited to, welding, bonding, connection through screws, riveting, etc.

In the above solution, the cavity 111 is divided into the plurality of sub-cavities 111 by the supporting member 1110, and all the sub-cavities 111 are independent of each other. Under the condition of improving the degree of weight reduction of the support 10, the strength and rigidity of the mounting beam 11 can be effectively improved, the deformation resistance of the support 10 can be improved, the risk of the battery 200 falling off can be reduced, and thus the driving reliability of the vehicle can be improved.

According to some embodiments of the present application, referring to FIG. 6, the plurality of sub-cavities 111 include a first sub-cavity 1111 and a second sub-cavity 1112. The mounting beam 11 includes a first wall 21, a second wall 22, a third wall 23, a fourth wall 24, a fifth wall 25, and a sixth wall 26. In the second direction x, two ends of the first wall 21 are connected to one end of the second wall 22 and one end of the third wall 23, respectively; in the first direction z, the fourth wall 24 is arranged opposite to and spaced apart from the first wall 21, and one end of the fourth wall 24 is connected to the other end of the second wall 22; in the first direction z, the fifth wall 25 is arranged opposite to and spaced apart from the first wall 21, and one end of the fifth wall 25 is connected to the other end of the third wall 23; in the first direction z, one end of the sixth wall 26 is connected to the other end of the fourth wall 24, the other end of the sixth wall 26 is connected to the first wall 21, and the first wall 21, the second wall 22, the fourth wall 24, and the sixth wall 26 together define the first sub-cavity 1111; the other end of the fifth wall 25 is connected to the sixth wall 26, and the first wall 21, the third wall 23, the fifth wall 25, and the sixth wall 26 together define the second sub-cavity 1112, and the first direction z, the second direction x, and the length direction y of the mounting beam are mutually perpendicular to each other.

In some embodiments, the mounting portion 110 can be a mounting hole 1100, and the mounting hole 1100 can penetrate through the mounting beam 11 in the first direction z. The second direction x can be perpendicular to the first direction z, and the second direction x can also be perpendicular to the length direction y of the mounting beam.

In some embodiments, the mounting beam 11 and the supporting member 1110 can be formed by bending a plate-like structure. Referring to FIG. 6, the mounting beam 11 includes a first wall 21, a second wall 22, a third wall 23, a fourth wall 24, a fifth wall 25, and a sixth wall 26. Two ends of the first wall 21 in the second direction x can be bent toward the same direction in the first direction z to form the second wall 22 and the third wall 23, respectively. The second wall 22 is bent in the second direction x toward the third wall 23 to form the fourth wall 24. The fourth wall 24 is bent in the first direction z toward the first wall 21 to form the sixth wall 26. The third wall 23 is bent in the second direction x toward the second wall 22 to form the fifth wall 25. An end of the fifth wall 25 away from the third wall 23 may be connected to the sixth wall 26.

An end of the sixth wall 26 away from the fourth wall 24 may be connected to the first wall 21 to play a supporting role. The sixth wall 26 may be at least a partial structure of the supporting member 1110, which may be understood as that the supporting member 1110 includes the sixth wall 26.

In some embodiments, the mounting hole 1100 can penetrate through the first wall 21 and the fifth wall 25, or the mounting hole 1100 can penetrate through the first wall 21 and the fourth wall 24.

Or in some other embodiments, different from the directions described above, the descriptions of the first wall 21, the second wall 22, the third wall 23, the fourth wall 24, the fifth wall 25, and the sixth wall 26 about the first direction z and the second direction x are exchanged. For example, in the first direction z, the two ends of the first wall 21 are connected to one end of the second wall 22 and one end of the third wall 23, respectively, that is, two ends of the first wall 21 in the first direction z can be bent, toward the same direction in the first direction z to form the second wall 22 and the third wall 23, respectively. In some other embodiments, the mounting hole 1100 may penetrate through the third wall 23, the sixth wall 26, and the second wall 22.

In some embodiments, a connection relationship between the sixth wall 26 and the first wall 21 includes, but is not limited to, abutment, bonding, welding, or connection through screws. In some embodiments, a connection relationship between the fifth wall 25 and the sixth wall 26 includes, but is not limited to, abutment, bonding, welding, or connection through screws.

In some embodiments, in a process of forming the first wall 21, the second wall 22, the third wall 23, the fourth wall 24, the fifth wall 25, and the sixth wall 26, the cavity 111 may be formed accordingly inside the mounting beam 11, and the cavity 111 includes a first sub-cavity 1111 and a second sub-cavity 1112.

In the above solution, the mounting beam 11 has a simple structure, and thus is convenient to manufacture. The supporting member 1110 may include the sixth wall 26. By arranging the sixth wall 26, the sixth wall 26 is enabled to be connected to the fourth wall 24 and the first wall 21, arranged opposite to each other, of the mounting beam 11, the strength and rigidity of the mounting beam 11 can be effectively improved, the risk of the battery 200 falling off can be reduced, the deformation resistance of the support 10 can be improved, and thus the driving reliability of the vehicle can be improved.

According to some embodiments of the present application, referring to FIG. 6, an end of the sixth wall 26 away from the fourth wall 24 is provided with a first bent portion 27, and the first bent portion 27 extends in the second direction x and is connected to the first wall 21.

The first bent portion 27 can be a portion arranged at the end of the sixth wall 26 and extending in the second direction x to have a larger connection area with the first wall 21. In some embodiments, the first bent portion 27 may extend toward the third wall 23. In some other embodiments, the first bent portion 27 may extend toward the second wall 22.

In some embodiments, a connection relationship between the first bent portion 27 and the first wall 21 includes, but is not limited to, abutment, bonding, welding, or connection through screws.

In the above solution, by arranging the first bent portion 27 to extend toward the third wall 23, the support 10 is enabled to uniformly bear the impact, so that the deformation resistance of the support 10 can be improved, the risk of the battery 200 falling off can be reduced, and thus the driving reliability of the vehicle can be improved.

According to some embodiments of the present application, the first bent portion 27 extends from an end of the sixth wall 26 toward the third wall 23.

In the above solution, by arranging the first bent portion 27 to extend toward the third wall 23, the support 10 is enabled to uniformly bear the impact, so that the deformation resistance of the support 10 can be improved, the risk of the battery 200 falling off can be reduced, and thus the driving reliability of the vehicle can be improved.

According to some embodiments of the present application, an end of the fifth wall 25 away from the third wall 23 is provided with a second bent portion 28, and the second bent portion 28 extends in the second direction z and is connected to the sixth wall 26.

The second bent portion 28 can be a portion arranged at the end of the fifth wall 25 and extending in the first direction z to have a larger connection area with the sixth wall 26. In some embodiments, the second bent portion 28 can extend toward the first wall 21.

In some embodiments, a connection relationship between the second bent portion 28 and the sixth wall 26 includes, but is not limited to, abutment, bonding, welding, or connection through screws.

In the above solution, by arranging the second bent portion 28, a connection area of the fifth wall 25 and the sixth wall 26 can be increased, and the reliability of connection between the fifth wall 25 and the sixth wall 26 can be improved, so that the mounting beam 11 has a good carrying capacity due to the geometric shape of a cross section thereof, and the support 10 has good deformation resistance while reducing the structural mass.

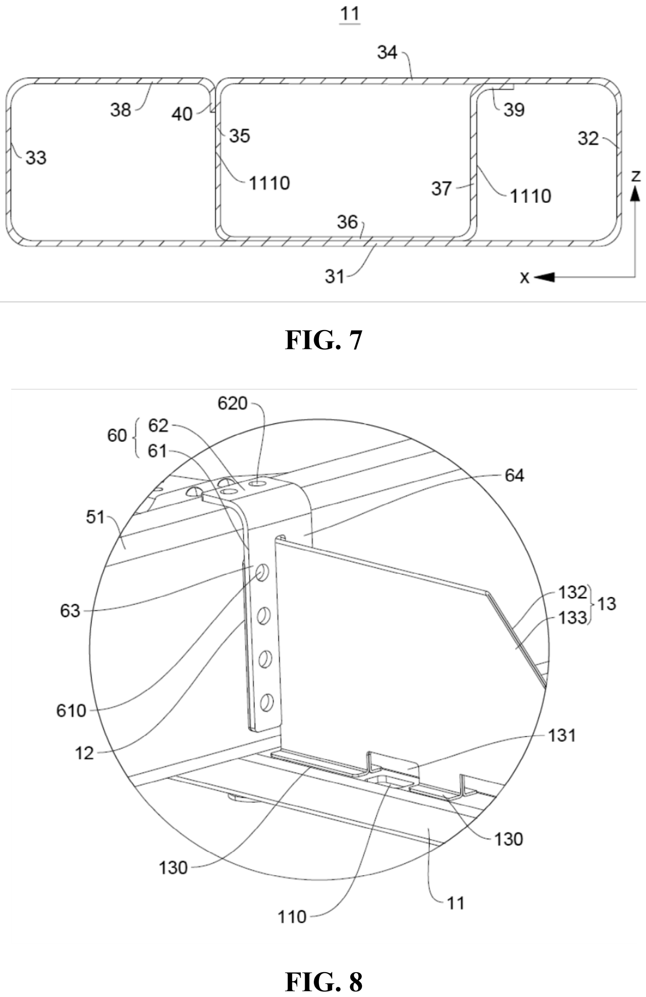

In some other embodiments of the present application, another mounting beam 11 is further provided. Referring to FIG. 7, FIG. 7 is a schematic diagram of a cross section of a mounting beam 11 in some other embodiments of the present application.

The plurality of sub-cavities 111 include a third sub-chamber, a fourth sub-chamber, and a fifth sub-chamber. The mounting beam 11 includes a seventh wall 31, an eighth wall 32, a ninth wall 33, a tenth wall 34, an eleventh wall 35, a twelfth wall 36, a thirteenth wall 37, and a fourteenth wall 38.

In the second direction x, two ends of the seventh wall 31 are connected to one end of the eighth wall 32 and one end of the ninth wall 33, respectively. In the first direction z, the tenth wall 34 is arranged opposite to and spaced from the seventh wall 31, and one end of the tenth wall 34 is connected to the other end of the eighth wall 32.

In the first direction z, one end of the eleventh wall 35 is connected to the other end of the tenth wall 34, and the other end of the eleventh wall 35 is connected to one end of the twelfth wall 36. The twelfth wall 36 extends in the first direction z toward the eighth wall 32 and is connected to the first wall 21. In the first direction z, one end of the thirteenth wall 37 is connected to the other end of the tenth wall 34, and the other end of the thirteenth wall 37 is connected to the tenth wall 34.

In the first direction z, the fourteenth wall 38 is arranged opposite to and spaced apart from the seventh wall 31, one end of the fourteenth wall 38 is connected to the other end of the ninth wall 33, and the other end of the fourteenth wall 38 is connected to the eleventh wall 35. The tenth wall 34, the eleventh wall 35, the twelfth wall 36, and the thirteenth wall 37 together define the third sub-chamber. The seventh wall 31, the eighth wall 32, the tenth wall 34, and the thirteenth wall 37 together define the fourth sub-chamber. The seventh wall 31, the ninth wall 33, and the fourteenth wall 38 together define the fifth sub-chamber.

An end of the thirteenth wall 37 away from the twelfth wall 36 is provided with a third bent portion 39. The third bent portion 39 extends in the first direction z and toward the eighth wall 32. The third bent portion 39 is connected to the tenth wall 34. An end of the fourteenth wall 38 away from the ninth wall 33 is provided with a fourth bent portion 40. The fourth bent portion 40 extends in the second direction x and is connected to the eleventh wall 35.

According to some embodiments of the present application, reference is made to FIG. 2 to FIG. 4. The support 10 further includes a connecting portion 12, the connecting portion 12 is connected to the mounting beam 11, and the connecting portion 12 is configured to be connected to a longitudinal beam 51 of the frame 50.

In some embodiments, the connecting portion 12 may be connected to an outer side surface or an inner side surface of the longitudinal beam 51 of the frame 50. A side surface of the longitudinal beam 51 facing the other longitudinal beam 51 can be the inner side surface, and a side surface of the longitudinal beam 51 away from the other longitudinal beam 51 can be the outer side surface. In some embodiments, the connecting portion 12 can be connected to the frame 50 by welding, connection through screws, or other connection methods.

The mounting beam 11 is directly or indirectly connected to the connecting portion 12 so that the mounting beam 11 can be connected to the frame 50. In some embodiments, the mounting beam 11 can be connected to the connecting portion 12 by welding, riveting, connection through screws, or other connection methods. In some embodiments, the mounting beam 11 and the connecting portion 12 can be integrally formed, for example, by roll forming or by a bending process.

In the above solution, by arranging the connecting portion 12, the mounting beam 11 can be effectively connected to the longitudinal beam 51 of the frame 50, so that the mounting beam 11 can effectively carry the battery 200 through the mounting portion 110, the risk of the battery 200 falling off can be reduced, and thus the driving reliability of the vehicle can be improved.

According to some embodiments of the present application, referring to FIG. 3, the mounting beam 11 is provided with two connecting portions 12, and the two connecting portions 12 are arranged spaced apart. The two connecting portions 12 and the mounting beam 11 together form a groove 120 with an upward opening, and the groove 120 is used for the frame 50 to pass through.

In some embodiments, two connecting portions 12 are arranged on each mounting beam 11, and the two connecting portions 12 are arranged spaced apart (for example, the two connecting portions 12 are arranged spaced apart in the length direction y of the mounting beam), so that the two connecting portions 12 can be connected to a pair of longitudinal beams 51 of the frame 50, respectively, for example, the outer side surfaces of the pair of longitudinal beams 51. That is, it can be understood as that the two connecting portions 12 on each mounting beam 11 are respectively located on the outer side of the frame 50.

"The groove 120 is used for the frame 50 to pass through" can be understood as that the longitudinal beam 51 of the frame 50 can pass through the groove 120 formed between the two connecting portions 12 on the mounting beam 11.

In the above solution, by arranging the two connecting portions 12, on the one hand, the groove 120 for avoiding the longitudinal beam 51 of the frame 50 can be formed; on the other hand, the connecting portion 12 can be connected to an outer side surface of the corresponding longitudinal beam 51, that is, the two longitudinal beams 51 of the frame 50 are respectively connected by the corresponding connecting portion 12, so that a mounting unit and the frame 50 have a stable connection relationship, thereby reducing the risk of the battery 200 falling off and improving the driving reliability of the vehicle; on the other hand, since the two connecting portions 12 are arranged and the two connecting portions 12 are arranged spaced apart in a transverse direction of the frame 50, that is, the mounting beam 11 can be provided with more mounting portions 110 to mount larger batteries 200 or more batteries 200, thereby effectively increasing the cruising range of the vehicle.

According to some embodiments of the present application, referring to FIG. 3, the support 10 further includes a rib plate 13, the rid plate 13 is located on a side of the connecting portion 12 deviating from the groove 120, and the rib plate 13 is connected to the mounting beam 11 and the connecting portion 12.

In some embodiments, the rib plate 13 can be a component connected to the mounting beam 11 and the connecting portion 12. In some embodiments, the rib plate 13 can be a component for reinforcing the structural strength of the connecting portion 12, the mounting beam 11, and the frame 50. In some embodiments, the rib plate 13 can be a reinforcing rib, a reinforcing beam, or a strengthening rib arranged between the connecting portion 12 and the mounting beam 11. In some embodiments, the rib plate 13 can be made of an aluminum alloy, steel, cast iron, or other materials. In some embodiments, the rib plate 13, the connecting portion 12, and the mounting beams 11 can be made from the same or different materials. In some embodiments, the rid plate 13 can be connected to the connecting portion 12 by welding, connection through screws, or other connection methods. Or, in some embodiments, the rib plate 13 can be integrally formed with the connecting portion 12. In some embodiments, the rib plate 13 can be connected to the mounting beam 11 by welding, connection through screws, or other connection methods. Or, in some embodiments, the rib plate 13 can be integrally formed with the connecting portion 12 and the mounting beam 11.

In the above solution, by arranging the rib plate 13 on an outer side of the frame 50, on the one hand, space between the connecting portion 12 and the mounting beam 11 can be reasonably utilized, and on the other hand, the structural strength of the connecting portion 12 and the mounting beam 11 can be improved, thereby reducing the risk of the battery 200 falling off and improving the driving reliability of the vehicle.

According to some embodiments of the present application, referring to FIG. 8, FIG. 8 is a structural diagram of a partial structure of the support 10 in some embodiments of the present application. An end of the rib plate 13 close to the mounting beam 11 is provided with a bent portion 130, and the rib plate 13 is connected to the mounting beam 11 through the bent portion 130.

The bent portion 130 is a component arranged at the end of the rib plate 13 close to the mounting beam 11. The bent portion 130 can be a component formed by bending or rolling the rib plate 13, and the bent portion 130 can be perpendicular to a main body part of the rib plate 13. The bent portion 130 has a surface facing the mounting beam 11, and the surface can be connected to a surface of the mounting beam 11.

In some embodiments, the rib plate 13 can be in a double-layer plate structure, which can be formed by stacking two plate-like structures, where one plate-like structure is bent to form a bent portion 130, and the bent portion 130 is connected to the mounting beam 11; the other plate-like structure is bent to form a bent portion 130, and the bent portion 130 is connected to the mounting beam 11. The bent portions 130 of the two plate-like structures are bent in opposite directions, for example, the bent portions 130 of the two plate-like structures are bent in a thickness direction of the rib plate 13 toward two sides of the rib plate 13.

In the above solution, by arranging the bent portion 130 at the end of the rib plate 13 close to the mounting beam 11, a connection area of the rib plate 13 and the mounting beam 11 can be increased, thereby improving the reliability of connection between the rib plate 13 and the mounting beam 11.

According to some embodiments of the present application, a notch 131 is formed in the end of the rib plate 13 close to the mounting beam 11, and the notch 131 is formed corresponding to the mounting portion 110.

The notch 131 may be a concave structure (or a groove-shaped structure) formed at the end of the rib plate 13. The notch 131 is formed corresponding to the mounting portion 110, which can provide space above the mounting portion 110. In some embodiments, the battery 200 has a mounting member corresponding to the mounting hole 1100, and the mounting member is inserted into the mounting hole 1100 to achieve connection between the battery 200 and the support 10. In the height direction, a size of the mounting member extending beyond the upper surface of the mounting beam 11 may be less than or equal to a distance from a bottom of the notch 131 to the upper surface of the mounting beam 11.

In the above solution, the notch 131 is formed in the end of the rib plate 13 close to the mounting beam 11 so as to free up space above the mounting portion 110, thereby reducing the risk of interference with the rib plate 13 when the battery 200 is mounted on the mounting portion 110.

According to some embodiments of the present application, referring to FIG. 3, the connecting portion 12 is a flange arranged on the rib plate 13, and the rib plate 13 and the connecting portion 12 are arranged perpendicular to each other.

"The connecting portion 12 is a flange arranged on the rib plate 13" can be understood as that the connecting portion 12 is formed by bending or rolling the rib plate 13, that is, it can be understood as that the connecting portion 12 and the rib plate 13 are in an integral structure. "The rib plate 13 and the connecting portion 12 are arranged perpendicular to each other" can be understood as that the connecting portion 12 is formed by bending the rib plate 13 by ninety degrees.

In the above solution, the connecting portion 12 can be the flange arranged on the rib plate 13. For example, the connecting portion 12 and the rib plate 13 are integrally formed, which can make the connecting portion 12 and the rib plate 13 have higher structural strength, and can effectively improve the structural strength of the mounting beam 11, thereby effectively carrying the battery 200 and reducing the risk of the battery 200 falling off.

According to some embodiments of the present application, the rib plate 13 includes a first rib plate 132 and a second rib plate 133 that are stacked, and the connecting portion 12 includes a first sub-connecting portion 12 and a second sub-connecting portion 12, the first sub-connecting portion 12 is a flange arranged on the first rib plate 132, and the second sub-connecting portion 12 is a flange arranged on the second rib plate 133.

In some embodiments, the rib plate 13 can be in a double-layer plate structure. For example, the rib plate 13 can be formed by stacking two plate-like structures. For another example, the rib plate 13 can form the double-layer plate structure by a plate-like structure through bending or other processes. Referring to FIG. 3, in a thickness direction of the rib plate 13, the rib plate 13 has a first rib plate 132 and a second rib plate 133 which are stacked on each other. The first sub-connecting portion 12 is a flange formed by bending or rolling the first rib plate 132, and the second sub-connecting portion 12 is a flange formed by bending or rolling the second rib plate 133. In the thickness direction of the rib plate 13, the first sub-connecting portion 12 and the second sub-connecting portion 12 are respectively located on two opposite sides of the rib plate 13.

In the above solution, the rib plate 13 can be in a double-layer plate structure. Since the rib plate 13 is in the double-layer plate structure, two flanges in opposite directions can be formed by the rid plate 13, that is, the first sub-connecting portion 12 and the second sub-connecting portion 12 are formed, so that there is a larger connection area between the rib plate 13 and the longitudinal beam 51, and the reliability of connection between the rib plate 13 and the longitudinal beam 51 can be improved, thereby improving the structural strength of the mounting beam 11, allowing the mounting beam 11 to effectively carry the battery 200, and reducing the risk of the battery 200 falling off.

According to some embodiments of the present application, referring to FIG. 2, the support 10 includes a plurality of mounting beams 11, the plurality of mounting beams 11 are arranged spaced apart, and an accommodating space for accommodating at least a part of the battery 200 is formed between every two adjacent mounting beams 11.

In some embodiments, the support 10 includes a plurality of mounting beams 11, and the plurality of mounting beam 11 can be arranged spaced apart from each other in the direction perpendicular to the length direction y of the mounting beam. In some embodiments, every two adjacent mounting beams 11 can be connected by a connecting member.

"An accommodating space for accommodating at least a part of the battery 200 is formed between every two adjacent mounting beams 11" can be understood as that the accommodating space formed between every two adjacent mounting beams 11 can accommodate at least a part of the structure of the battery 200, such as accommodating one battery 200, or accommodating a part of one battery 200.

In the above solution, the support 10 includes the plurality of mounting beams 11, so that the accommodating space for accommodating at least a part of the battery 200 can be formed between every two adjacent mounting beams 11, and the battery 200 can be installed in the corresponding accommodating space in an orderly manner, thereby improving the battery swapping efficiency of the vehicle.

Some embodiments of the present application further provide a support assembly 100, and the support assembly 100 includes a frame 50 and the support 10 provided above. The support 10 is installed on a longitudinal beam 51 of the frame 50.

The support assembly 100 is an assembly for mounting the battery 200. In a vehicle, the support assembly 100 may be arranged at a bottom of the vehicle.

In the above solution, by installing the support 10 on the longitudinal beam 51 of the frame 50, the frame 50 can have a high degree of weight reduction while being able to achieve battery swapping operation.

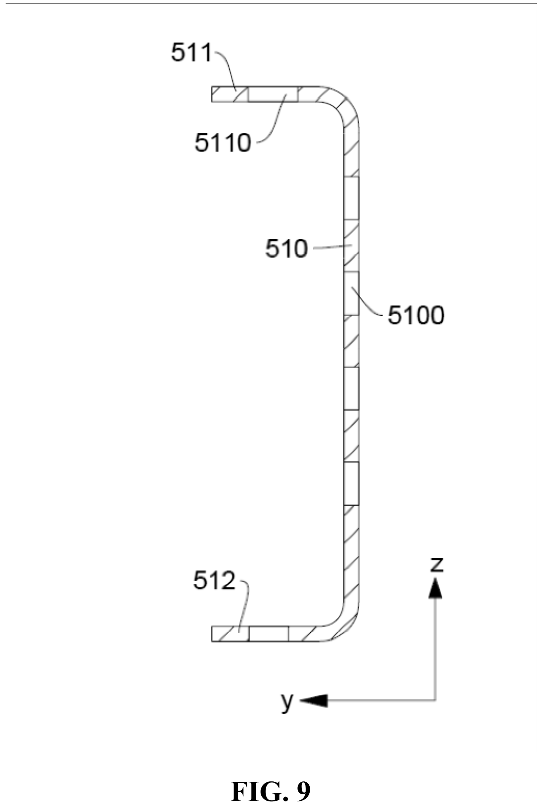

According to some embodiments of the present application, referring to FIG. 9, FIG. 9 is a schematic structural diagram of the longitudinal beam 51 in some embodiments of the present application. The longitudinal beam 51 includes a web 510, an upper wing plate 511, and a lower wing plate 512, and the web 510 is connected to the upper wing plate 511 and the lower wing plate 512. The support 10 further includes a connecting portion 12, and the connecting portion 12 is connected to the web 510.

In some embodiments, the second direction x described above may be a height direction. In the height direction, the longitudinal beam 51 includes an upper wing plate 511, a web 510, and a lower wing plate 512, where both ends of the web 510 in the height direction are connected to the upper wing plate 511 and the lower wing plate 512, respectively. In some embodiments, the upper wing plate 511 and the lower wing plate 512 are bent toward the same side in a thickness direction of the web 510.

The connecting portion 12 can be a structural component of the support 10, and the connecting portion 12 can be connected to the web 510, so that the support 10 is connected to the longitudinal beam 51. In some embodiments, a connection relationship between the connecting portion 12 and the web 510 includes, but is not limited to, bonding, welding, riveting, or connection through screws.

According to some embodiments of the present application, the mounting beam 11 is connected to the lower wing plate 512.

In some embodiments, the lower wing plate 512 may extend in the length direction y of the mounting beam. In some embodiments, the lower wing plate 512 and the mounting beam 11 may be in surface contact and connected. In some embodiments, a connection relationship between the mounting beam 11 and the lower wing plate 512 includes, but is not limited to, bonding, welding, riveting, or connection through screws. For example, the lower wing plate 512 and the mounting beam 11 are each provided with a corresponding through hole, and the mounting beam 11 and the lower wing plate 512 are connected by enabling a third fastener 73 (such as a bolt) to pass through the through hole.

In the above solution, the support 10 is connected to the web 510 of the longitudinal beam 51 through the connecting portion 12 and connected to the lower wing plate 512 of the longitudinal beam 51 through the mounting beam 11, so that the support 10 can be firmly installed on the longitudinal beam 51, thereby reducing the risk of the support 10 falling off from the longitudinal beam 51 and improving the driving reliability of the vehicle.

According to some embodiments of the present application, referring to FIG. 8, the support assembly 100 further includes a reinforcing member 60, and the reinforcing member 60 is connected to the longitudinal beam 51 and the connecting portion 12.

In some embodiments, the reinforcing member 60 can have a function for strengthening the structural strength of the connecting portion 12 and improving the stability of connection between the connecting portion 12 and the frame 50, and can also have a function for connecting the longitudinal beam 51 and improving the stability of connection between the support 10 and the frame 50.

In some embodiments, the reinforcing member 60 can be in a sheet-like structure, that is, a thickness of the reinforcing member 60 is relatively small, and at least a part of the reinforcing member 60 can be attached to the surface of the connecting portion 12 and connected to the frame 50. In some embodiments, the reinforcing member 60 can be connected to the longitudinal beam 51 and the connecting portion 12 by welding, riveting or connection through screws.

In some embodiments, referring to FIG. 8, the reinforcing member 60 includes a first side wing portion 63, a second side wing portion 64, and an upper wing portion, the upper wing portion is connected to the upper wing plate 511 of the longitudinal beam 51, ends of the first side wing portion 63 and the second side wing portion 64 are connected to the upper wing portion, the first side wing portion 63 and the second side wing portion 64 are arranged opposite to each other in the thickness direction of the rib plate 13, an avoidance gap is formed between the first side wing portion 63 and the second side wing portion 64, and the avoidance gap can avoid the rib plate 13. The first side wing portion 63 can make contact with a part of the connecting portion 12, that is, a part of the connecting portion 12 is located between the first side wing portion 63 and the web 510, and the second side wing portion 64 can make contact with another part of the connecting portion 12, that is, another part of the connecting portion 12 is located between the second side wing portion 64 and the web 510.

In the above solution, by arranging the reinforcing member 60, on the one hand, the stability of connection between the support 10 and the longitudinal beam 51 can be improved, and on the other hand, the structural strength of the connecting portion 12 can be effectively improved, thereby improving the structural stability of the support 10, reducing the risk of the battery 200 detaching, and improving the driving stability of the vehicle.

According to some embodiments of the present application, referring to FIG. 8, the reinforcing component 60 includes a first part 61 and a second part 62 connected to each other, the first part 61 is located on a side of the connecting portion 12 deviating from the web 510, the first part 61, the connecting portion 12, and the web 510 are connected to each other, and the second part 62 is connected to the upper wing plate 511.

The first part 61 is a portion of the reinforcing member 60 connected to the connecting portion 12. The second part 62 is a portion of the reinforcing member 60 connected to the upper wing plate 511. In some embodiments, the first part 61 can be the upper wing portion described above. The second part 62 includes a first side wing portion 63 and a second side wing portion 64 described above.

In some embodiments, a connection relationship between the first part 61, the connecting portion 12, and the web 510 includes, but is not limited to, bonding, welding, riveting, or connection through screws. In some embodiments, a connection relationship between the second part 62 and the upper wing plate 511 includes, but is not limited to, bonding, welding, riveting, or connection through screws.

In the above solution, the support 10 is connected to the web 510 of the longitudinal beam 51 through the connecting portion 12, and connected to the upper wing plate 511 of the longitudinal beam 51 through the second part 62 of the reinforcing member 60, so that the support 10 can be firmly installed on the longitudinal beam 51, thereby reducing the risk of the support 10 falling off from the longitudinal beam 51, and improving the driving reliability of the vehicle.

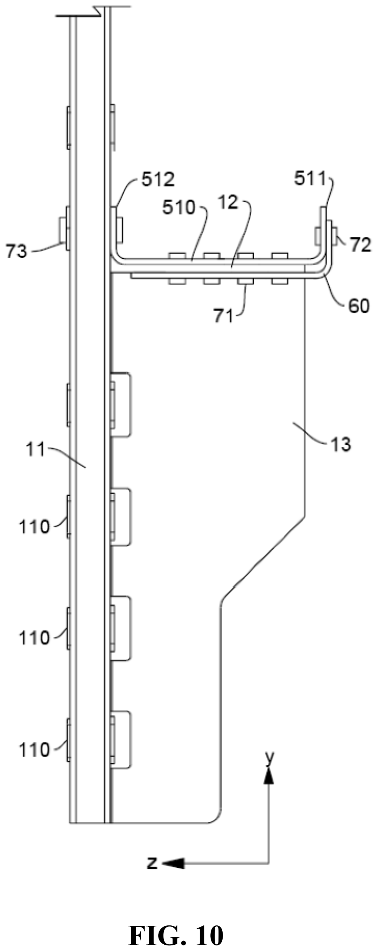

According to some embodiments of the present application, in combination with FIG. 3, FIG. 8, FIG. 9, and FIG. 10, FIG. 10 is a schematic diagram of a partial structure of the support 10 and the longitudinal beam 51 in some embodiments of the present application.

The first part 61 is provided with a first through hole 610, the connecting portion 12 is provided with a second through hole 121, the web 510 is provided with a third through hole 5100, the support assembly 100 further includes a first fastener 71, and the first fastener 71 penetrates through the first through hole 610, the second through hole 121, and the third through hole 5100 to fix the first part 61 and the connecting portion 12 to the web 510.

The first through hole 610 is a hole-shaped structure formed in the first part 61. The second through hole 121 is a hole-shaped structure formed in the connecting portion 12. The third through hole 5100 is a hole-shaped structure formed in the web 510. When the support 10 is assembled on the longitudinal beam 51, the first through hole 610, the second through hole 121, and the third through hole 5100 are coaxially arranged for the first fastener 71 to pass through. The first fastener 71 can be a bolt, and the bolt can be connected to a nut after passing through the first through hole 610, the second through hole 121, and the third through hole 5100, so as to fasten the reinforcing member 60, the connecting portion 12, and the longitudinal beam 51 into one.

In the above solution, by forming the first through hole 610 in the first part 61 of the reinforcing member 60, forming the second through hole 121 in the connecting portion 12, and forming the third through hole 5100 in the web 510 of the longitudinal beam 51, the first fastener 71 can lock the reinforcing member 60, the connecting portion 12, and the longitudinal beam 51 into one, so that the support 10 is firmly installed on the longitudinal beam 51, thereby reducing the risk of the support 10 falling off from the longitudinal beam 51 and improving the driving reliability of the vehicle.

According to some embodiments of the present application, referring to FIG. 8 to FIG. 10, the second part 62 is provided with a fourth through hole 620, the upper wing plate 511 is provided with a fifth through hole 5110, the support assembly 100 further includes a second fastener 72, and the second fastener 72 penetrates through the fourth through hole 620 and the fifth through hole 5110 to fix the second part 62 to the upper wing plate 511.

The fourth through hole 620 is a hole-shaped structure formed in the second part 62. The fifth through hole 5110 is a hole-shaped structure formed in the upper wing plate 511. When the support 10 is assembled on the longitudinal beam 51, the fourth through hole 620 and the fifth through hole 5110 are coaxially arranged for the second fastener 72 to pass through. The second fastener 72 can be a bolt, and the bolt can be connected to a nut after passing through the fourth through hole 620 and the fifth through hole 5110, so as to fasten the reinforcing member 60 and the longitudinal beam 51 into one.

In the above solution, by forming the fourth through hole 620 in the second part 62 of the reinforcing member 60 and forming the fifth through hole 5110 in the upper wing plate 511 of the longitudinal beam 51, the second fastener 72 can lock the reinforcing member 60 and the longitudinal beam 51 into one, so that the support 10 is firmly installed on the longitudinal beam 51, thereby reducing the risk of the support 10 falling off from the longitudinal beam 51 and improving the driving reliability of the vehicle.

Some embodiments of the present application further provide a vehicle, including a battery 200 and the support assembly 100 provided above. The battery 200 is detachably connected to the mounting portion 110.

In the above solution, a vehicle is provided, and the vehicle has a battery swapping function and the vehicle is highly lightweight.

According to some embodiments of the present application, a support 10 is provided. Reference is made to FIG. 2 to FIG. 10.

The support 10 is configured to be installed on a frame 50 of a vehicle, such as a frame 50 of a heavy truck. The support 10 can be installed on the frame 50 of a vehicle before the vehicle leaves the factory. The support 10 can also be additionally installed on the frame 50 of the vehicle after the vehicle leaves the factory. The support 10 enables battery swapping in the vehicle. The support 10 can be mounted on a pair of longitudinal beams 51 of the frame 50.

The support 10 can include a plurality of mounting beams 11, for example, the support 10 includes four mounting beams 11, and the four mounting beams 11 are arranged spaced apart in the length direction of the longitudinal beam 51. Two adjacent mounting beams 11 can form an accommodating space for accommodating the battery 200. Each accommodating space can accommodate a part of the battery 200 or the entire battery 200.

The support 10 further includes a connecting portion 12, a rib plate 13, and a reinforcing member 60. The connecting portion 12 is connected to the mounting beam 11, and the rib plate 13 is connected to the mounting beam 11 and the connecting portion 12. A part of the reinforcing member 60 is connected to the connecting portion 12. When the support 10 is installed on the longitudinal beam 51, the connecting portion 12 and a part of the reinforcing member 60 are fastened to the web 510 of the longitudinal beam 51 by the first fastener 71. The other part of the reinforcing member 60 is fastened to the upper wing plate 511 of the longitudinal beam 51 by the second fastener 72, and the mounting beam 11 is fastened to the lower wing plate 512 of the longitudinal beam 51 by the third fastener 73.

The mounting beam 11 is provided with a plurality of mounting holes 1100, the plurality of mounting holes 1100 are formed spaced apart in a length direction y of the mounting beam, and the plurality of mounting holes 1100 are configured to be detachably connected to the battery 200. The mounting hole 1100 is provided with a mounting sleeve 1101, both ends of the mounting sleeve 1101 protrude from the first end wall 112 and the second end wall 113, opposite to each other, of the mounting beam 11, and the parts of the mounting sleeve 1101 protruding from the first end wall 112 and the second end wall 113 are welded to the first end wall 112 and the second end wall 113, respectively.

In order to achieve weigh reduction of the support 10 and improve the degree of weight reduction of the vehicle, a cavity 111 is formed inside the mounting beam 11, and the cavity 111 extends in the length direction y of the mounting beam.

The above descriptions are merely preferred embodiments of the present application, and are not intended to limit the present application. For persons skilled in the art, the present application may have various modifications and variations. Any modification, equivalent replacement, improvement, and the like made within the spirit and principle of the present application shall fall within the scope of protection of the present application.

## Claims

1. A support, configured to be installed on a frame, comprising:
a mounting beam, wherein the mounting beam is provided with a plurality of mounting portions, the plurality of mounting portions are arranged spaced apart in a length direction of the mounting beam, and the plurality of mounting portions are configured to be detachably connected to batteries;
wherein a cavity is formed inside the mounting beam, and the cavity extends in the length direction of the mounting beam.

2. The support according to claim 1, wherein
the mounting portion comprises a mounting hole formed in the mounting beam; and
the mounting hole penetrates through the mounting beam in a first direction, and the first direction is perpendicular to the length direction of the mounting beam.

3. The support according to claim 2, wherein
the mounting portion further comprises a mounting sleeve, and at least a part of the mounting sleeve is arranged in the mounting hole.

4. The support according to claim 3, wherein
in the first direction, the mounting beam has a first end wall and a second end wall opposite to each other, and the mounting sleeve is connected to the first end wall and the second end wall.

5. The support according to any one of claims 1 to 4, wherein
an outer contour of a cross section of the mounting beam is rectangular.

6. The support according to any one of claims 1 to 5, wherein
a supporting member is arranged in the cavity, and the supporting member is connected to the mounting beam.

7. The support according to claim 6, wherein
the supporting member and the mounting beam are integrally formed.

8. The support according to claim 7, wherein
the supporting member and the mounting beam are formed by bending a plate.

9. The support according to any one of claims 6 to 8, wherein
the supporting member divides the cavity into a plurality of sub-cavities, and the sub-cavities extend in the length direction of the mounting beam.

10. The support according to claim 9, wherein
the plurality of sub-cavities comprise a first sub-cavity and a second sub-cavity; the mounting beam comprises a first wall, a second wall, a third wall, a fourth wall, a fifth wall, and a sixth wall;
in a second direction, two ends of the first wall are connected to one end of the second wall and one end of the third wall, respectively; in a first direction, the fourth wall is arranged opposite to and spaced apart from the first wall, and one end of the fourth wall is connected to the other end of the second wall; in the first direction, the fifth wall is arranged opposite to and spaced apart from the first wall, and one end of the fifth wall is connected to the other end of the third wall; in the first direction, one end of the sixth wall is connected to the other end of the fourth wall, the other end of the sixth wall is connected to the first wall, and the first wall, the second wall, the fourth wall, and the sixth wall together define the first sub-cavity; the other end of the fifth wall is connected to the sixth wall, and the first wall, the third wall, the fifth wall, and the sixth wall together define the second sub-cavity, and the first direction, the second direction, and the length direction of the mounting beam are mutually perpendicular to each other.

11. The support according to claim 10, wherein an end of the sixth wall away from the fourth wall is provided with a first bent portion, and the first bent portion extends in the second direction and is connected to the first wall.

12. The support according to claim 11, wherein
the first bent portion extends from an end of the sixth wall toward the third wall.

13. The support according to any one of claims 10 to 12, wherein
an end of the fifth wall away from the third wall is provided with a second bent portion, and the second bent portion extends in the first direction and is connected to the sixth wall.

14. The support according to any one of claims 1 to 13, wherein
the support further comprises a connecting portion, the connecting portion is connected to the mounting beam, and the connecting portion is configured to be connected to a longitudinal beam of the frame.

15. The support according to claim 14, wherein
the mounting beam is provided with two connecting portions, the two connecting portions are arranged spaced apart, the two connecting portions and the mounting beam together form a groove with an upward opening, and the groove is used for the frame to pass through.

16. The support according to claim 15, wherein
the support further comprises a rib plate, the rid plate is located on a side of the connecting portion deviating from the groove, and the rib plate is connected to the mounting beam and the connecting portion.

17. The support according to claim 16, wherein
an end of the rib plate close to the mounting beam is provided with a bent portion, and the rib plate is connected to the mounting beam through the bent portion.

18. The support according to claim 16 or 17, wherein
a notch is formed in the end of the rib plate close to the mounting beam, and the notch is formed corresponding to the mounting portion.

19. The support according to any one of claims 16 to 17, wherein
the connecting portion is a flange arranged on the rib plate, and the rib plate and the connecting portion are arranged perpendicular to each other.

20. The support according to claim 19, wherein
the rib plate comprises a first rib plate and a second rib plate that are stacked, the connecting portion comprises a first sub-connecting portion and a second sub-connecting portion, the first sub-connecting portion is a flange arranged on the first rib plate, and the second sub-connecting portion is a flange arranged on the second rib plate.

21. The support according to any one of claims 1 to 20, wherein
the support comprises a plurality of mounting beams, the plurality of mounting beams are arranged spaced apart, and an accommodating space for accommodating at least a part of the battery is formed between every two adjacent mounting beams.

22. A support assembly, comprising:
a frame; and
the support according to any one of claims 1 to 21, wherein the support is installed on a longitudinal beam of the frame.

23. The support assembly according to claim 22, wherein
the longitudinal beam comprises a web, an upper wing plate, and a lower wing plate, and the web is connected to the upper wing plate and the lower wing plate; and
the support further comprises a connecting portion, and the connecting portion is connected to the web.

24. The support assembly according to claim 23, wherein
the mounting beam is connected to the lower wing plate.

25. The support assembly according to claim 23 or 24, wherein
the support assembly further comprises a reinforcing member, and the reinforcing member is connected to the longitudinal beam and the connecting portion.

26. The support assembly according to claim 25, wherein
the reinforcing member comprises a first part and a second part connected to each other, the first part is located on a side of the connecting portion deviating from the web, the first part, the connecting portion, and the web are connected to each other, and the second part is connected to the upper wing plate.

27. The support assembly according to claim 26, wherein
the first part is provided with a first through hole, the connecting portion is provided with a second through hole, the web is provided with a third through hole, the support assembly further comprises a first fastener, and the first fastener penetrates through the first through hole, the second through hole, and the third through hole to fix the first part and the connecting portion to the web.

28. The support assembly according to claim 26 or 27, wherein
the second part is provided with a fourth through hole, the upper wing plate is provided with a fifth through hole, the support assembly further comprises a second fastener, and the second fastener penetrates through the fourth through hole and the fifth through hole to fix the second part to the upper wing plate.

29. A vehicle, comprising:
the support assembly according to any one of claims 22 to 28; and
a battery, wherein the battery is detachably connected to the mounting portion.
